# FASCICULE DE BREVET EUROPEEN

(11) **EP 3 238 975 B1**
(45) Date de publication et mention de la délivrance du brevet: **23.06.2021**
(21) Numéro de dépôt: 17167797.4
(22) Date de dépôt: 24.04.2017
(51) Int. Cl.: B60L 3/00, B60L 3/04, B60L 9/14, B60L 9/30, B60L 5/18

(54) **SYSTÈME DE PANTOGRAPHE À SUPRACONDUCTEUR, ET VÉHICULE FERROVIAIRE COMPRENANT LEDIT SYSTÈME**
STROMABNEHMERSYSTEM MIT SUPRALEITER, UND SCHIENENFAHRZEUG, DAS EIN SOLCHES SYSTEM UMFASST
SUPERCONDUCTOR PANTOGRAPH SYSTEM, AND RAILWAY VEHICLE COMPRISING SAID SYSTEM

(30) Priorité: 28.04.2016 FR 1653788
(43) Date de publication de la demande: 01.11.2017
(73) Titulaire: SNCF Mobilités, 93200 Saint-Denis (FR)
(72) Inventeur: GOERES, David, 72000 LE MANS (FR)
(74) Mandataire: Gevers & Orès

(56) Documents cités:
- EP-A1- 0 596 790
- EP-A1- 1 288 060
- EP-A1- 2 081 207
- JONES N C ET AL: "BB 10003-prototype electric locomotive for the TMST", PROCEEDINGS OF THE IEEE/ASME JOINT RAILROAD CONFERENCE. ST. LOUIS, MAY 21 - 23, 1991; [PROCEEDINGS OF THE IEEE/ASME JOINT RAILROAD CONFERENCE], NEW YORK, IEEE, US, vol. -, 21 mai 1991 (1991-05-21), pages 125-132, XP010047407, DOI: 10.1109/RRCON.1991.160936 ISBN: 978-0-7803-0072-9
- PER L. LARSSON ET AL: "Integrated propulsion and auxiliary supply systems for multi-system operation", 2007 EUROPEAN CONFERENCE ON POWER ELECTRONICS AND APPLICATIONS, 1 janvier 2007 (2007-01-01), pages 1-8, XP055334461, DOI: 10.1109/EPE.2007.4417476
- NOE ET AL: "SUPRALEITENDE STROMBEGRENZER IN DER ENERGIETECHNIK", ELEKTRIE, VEB VERLAG TECHNIK. BERLIN, DD, vol. 51, no. 11/12, 1 janvier 1997 (1997-01-01), pages 414-424, XP000869316, ISSN: 0013-5399

## Description

### 1. Domaine technique de l'invention

L'invention concerne les systèmes de pantographe ferroviaire. En particulier, l'invention concerne les systèmes de pantographe ferroviaire comprenant au moins deux pantographes distincts, chacun permettant de capter un courant électrique d'une caténaire dans laquelle circule un courant de type et/ou de tension différent.

### 2. Arrière-plan technologique

Les pantographes sont des éléments permettant de capter un courant électrique circulant dans une caténaire, afin d'alimenter électriquement un véhicule ferroviaire (train, tramway, etc.), le courant capté étant principalement utilisé pour alimenter le moteur dudit véhicule.

Les caténaires utilisées pour le transport du courant électrique au niveau des voies ferroviaires peuvent être de différents types, et peuvent notamment transporter du courant électrique sous différentes formes (continu, alternatif à des fréquences variées), et à des tensions différentes. Notamment, en Europe, certains pays ou régions d'un pays présentent des caténaires différentes les unes des autres. Ainsi, un train circulant dans plusieurs pays européens peut rencontrer, au fil du trajet, une multitude de caténaires différentes. Certains pantographes sont compatibles avec plusieurs caténaires, c'est-à-dire qu'ils présentent une géométrie compatible et sont adaptés aux courants transportés de plusieurs caténaires, mais d'autres pantographes sont totalement incompatibles avec certaines caténaires.

Pour permettre la circulation du véhicule sans changement de pantographe ou de locomotive, les véhicules ferroviaires peuvent être équipés de plusieurs pantographes, permettant ainsi de capter le courant de plusieurs caténaires différentes. Un des pantographes est déployé pour capter le courant provenant de la caténaire, et les autres pantographes sont repliés. De tels systèmes sont connus des documents EP0596790A1, EP1288060A1, EP2081207A1, JONES N C ET AL: "BB 10003-prototype electric locomotive for the TMST", PROCEEDINGS OF THE IEEE/ASME JOINT RAILROAD CONFERENCE. ST. LOUIS, MAY 21 - 23, 1991, et PER L. LARSSON ET AL: "Integrated propulsion and auxiliary supply systems for multi-system opération", 2007 EUROPEAN CONFERENCE ON POWER ELECTRONICS AND APPLICATIONS, 1 janvier 2007.

Chacun de ces pantographes est connecté à différents circuits d'alimentation, chaque circuit étant adapté pour traiter le courant électrique provenant d'un ou plusieurs types de caténaire. Le ou les pantographes associés aux circuits d'alimentation forment un système de pantographe ferroviaire, destiné à capter le courant provenant d'une caténaire et à alimenter un groupe moteur du véhicule ferroviaire grâce au courant capté. Le courant est aussi utilisé pour alimenter les équipements auxiliaires du véhicule ferroviaire.

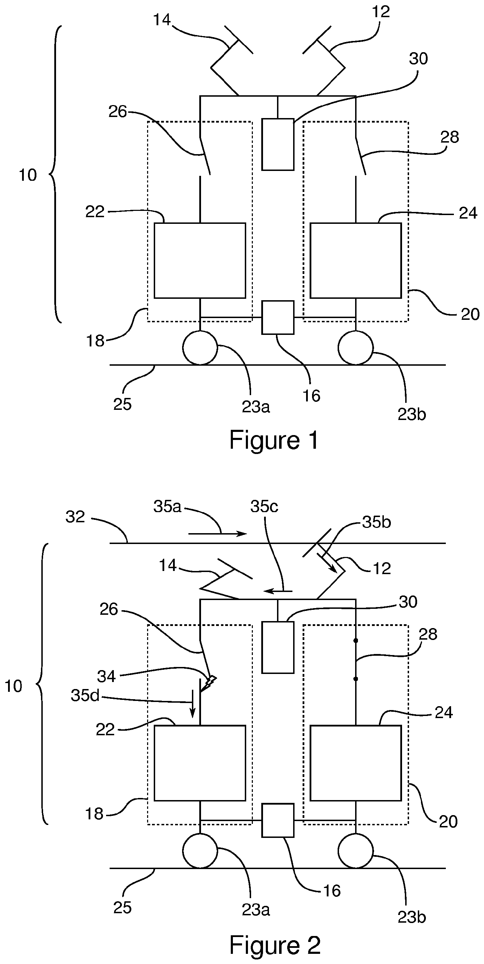

Par exemple, la figure 1 représente un système 10 de pantographe selon l'art antérieur, comprenant un premier pantographe, dit pantographe 12 à courant continu, un deuxième pantographe, dit pantographe 14 à courant alternatif, un premier circuit d'alimentation du groupe moteur 16, dit circuit 18 alternatif, adapté pour recevoir un courant alternatif, et un deuxième circuit d'alimentation du groupe moteur 16, dit circuit 20 continu, adapté pour recevoir un courant continu. Le circuit 18 alternatif comprend notamment un transformateur 22 principal et le circuit 20 continu comprend notamment un convertisseur 24 continu/continu, chacun permettant de convertir le courant reçu de la caténaire et le transmettre au groupe moteur 16. Le courant électrique circule ensuite par un rail 25 ou un câble de retour de courant de traction via des roues 23a, 23b du véhicule ferroviaire.

Les pantographes sont reliés entre eux de façon à partager des équipements en commun. Toutefois, ces pantographes doivent être associés à des systèmes de commutateurs de type disjoncteurs permettant de connecter les pantographes aux circuits d'alimentation adaptés afin de transmettre un type de courant électrique (alternatif ou continu) au circuit adapté à ce courant électrique. En référence avec la figure 1, le circuit 18 alternatif comprend un disjoncteur 26 alternatif et le circuit 20 continu comprend un disjoncteur 28 continu.

Le disjoncteur 26 alternatif et le disjoncteur 28 continu sont pilotés par le conducteur du véhicule, généralement assisté par un transformateur 30 de palpage adapté pour détecter le courant électrique transmis par la caténaire et éviter l'enclenchement d'un disjoncteur non adapté. Néanmoins, un défaut sur un des disjoncteurs peut entrainer une conduction permanente de celui-ci alors qu'il est en position ouverte. Ainsi, un courant continu peut être transmis au circuit d'alimentation alternatif, et provoquer un incendie au niveau du transformateur principal. Par exemple, la figure 2 représente un système de pantographe de l'art antérieur, selon le même mode de réalisation que celui représenté figure 1, dans lequel le pantographe 12 à courant continu est relié à une caténaire 32 dans laquelle circule un courant électrique continu : le pantographe 12 à courant continu est en position dite déployée, de façon à entrer en contact avec la caténaire 32, et le pantographe 14 à courant alternatif est en position dite repliée, de façon à éviter tout contact avec la caténaire 32. Le système de pantographe est donc configuré pour alimenter le groupe moteur 16 via le circuit 20 continu : le disjoncteur 28 continu est en position fermée et le disjoncteur 26 alternatif est en position ouverte. Toutefois, du fait d'un disfonctionnement du disjoncteur 26 alternatif, celui-ci conduit le courant électrique continu tout en étant en position ouverte (ladite conduction étant représentée par l'éclair 34). Le courant électrique continu suit alors le trajet représenté par les flèches 35a, 35b, 35c, 35d, 35e, vers le convertisseur 24 continu-continu mais aussi vers le transformateur 22 principal. Le transformateur 22 principal reçoit ainsi du courant électrique continu et peut donc être endommagé, détruit et/ou provoquer un incendie.

Pour pallier ces inconvénients, plusieurs solutions existent. Une première solution est d'utiliser un disjoncteur monophasé à double coupure. En s'ouvrant, la liaison électrique entre le disjoncteur monophasé et les pantographes est interrompue. Cette solution entraine toutefois un encombrement plus important du disjoncteur, et un coût plus élevé.

Une autre solution consiste à dissocier électriquement les circuits d'alimentation continus et alternatifs. Néanmoins, cette solution ne permet plus de profiter de la mise en commun du transformateur 30 de palpage.

D'autres solutions proposées nécessitent la détection de la circulation d'un courant continu dans le circuit alternatif, notamment aux bornes du transformateur principal. L'inconvénient principal de ces solutions est qu'elles nécessitent une détection très rapide de façon à descendre le pantographe afin de le déconnecter de la caténaire avant que des dégâts n'apparaissent au niveau du transformateur principal. De plus, une descente rapide du pantographe peut provoquer un arc électrique endommageant le pantographe et la caténaire.

Une solution alternative est d'ajouter une redondance à chaque disjoncteur, de façon à prévenir le passage du courant en cas de disfonctionnement d'un disjoncteur. Cette solution nécessite néanmoins l'ajout d'éléments coûteux, et complexifie et défiabilise la commande du disjoncteur.

L'Homme du métier est donc à la recherche d'une solution simple et peu coûteuse pour répondre à ce problème technique.

### 3. Objectifs de l'invention

L'invention vise à pallier au moins certains des inconvénients des systèmes de pantographe ferroviaire connus.

En particulier, l'invention vise à fournir, dans au moins un mode de réalisation de l'invention, un système de pantographe permettant d'éviter la propagation d'un courant électrique continu dans un circuit destiné à recevoir et traiter un courant électrique alternatif.

L'invention vise aussi à fournir, dans au moins un mode de réalisation, un système de pantographe permettant de réduire le risque d'incendie.

L'invention vise aussi à fournir, dans au moins un mode de réalisation de l'invention, un système de pantographe présentant une maintenance aisée.

L'invention vise aussi à fournir, dans au moins un mode de réalisation, un système de pantographe peu coûteux.

L'invention vise aussi à fournir, dans au moins un mode de réalisation, un système de pantographe ne nécessitant pas de dispositif de commande supplémentaire.

L'invention vise aussi à fournir, dans au moins un mode de réalisation, un système de pantographe ne nécessitant pas de remplacement d'une pièce en cas de défaillance.

### 4. Exposé de l'invention

Pour ce faire, l'invention concerne un système de pantographe ferroviaire de captage d'un courant électrique d'une caténaire dans laquelle circule un courant électrique alternatif ou continu, destiné à alimenter un groupe moteur d'un véhicule ferroviaire, comprenant :
- un premier circuit d'alimentation du groupe moteur en courant continu, dit circuit continu, adapté pour recevoir un courant électrique continu, et comprenant un convertisseur continu-continu adapté pour convertir ledit courant électrique continu pour alimenter le groupe moteur,
- un deuxième circuit d'alimentation du groupe moteur en courant alternatif, dit circuit alternatif, adapté pour recevoir un courant électrique alternatif, et comprenant un transformateur principal adapté pour transformer le courant électrique alternatif pour alimenter le groupe moteur,
- un circuit intermédiaire, reliant le circuit continu et le circuit alternatif,
- au moins un pantographe, dit pantographe à courant continu, adapté pour relier le circuit intermédiaire et la caténaire, et pour transmettre audit circuit intermédiaire un courant électrique continu provenant de la caténaire lorsque celle-ci est parcourue par un courant électrique continu,
- au moins un pantographe, dit pantographe à courant alternatif, adapté pour relier le circuit intermédiaire et la caténaire, et pour transmettre audit circuit intermédiaire un courant électrique alternatif provenant de la caténaire lorsque celle-ci est parcourue par un courant électrique alternatif,
caractérisé en ce que le circuit (40) intermédiaire comprend un système limiteur de courant, comprenant un câble supraconducteur disposé dans le circuit (40) intermédiaire entre ledit pantographe (12) à courant continu et le circuit (18) alternatif et configuré pour présenter un premier état dit état supraconducteur, dans lequel le câble supraconducteur a une résistance faible en cas de circulation, vers le circuit (18) alternatif, d'un courant électrique continu d'intensité inférieure à une intensité prédéterminée, dite intensité critique, et pour basculer dans un deuxième état dit état critique, dans lequel le câble supraconducteur a une résistance élevée en cas de circulation, vers le circuit (18) alternatif, d'un courant électrique continu d'intensité supérieure à l'intensité critique.

Le terme « la caténaire » désigne la caténaire dont un pantographe capte le courant à un instant donné, ledit pantographe ne captant le courant électrique que d'une caténaire à la fois. Le terme « la caténaire » désigne ainsi une caténaire pouvant changer de type durant le déplacement du véhicule ferroviaire, notamment pouvant transporter des courants de type différent (alternatif ou continu, tension/courant différents, etc.).

La caténaire désigne la ligne aérienne de contact, à suspension caténaire (composant d'une installation de traction électrique ferroviaire), et peut être une caténaire adaptée pour un véhicule ferroviaire de type train ou tramway.

On entend par circuit intermédiaire un circuit de connexion entre les pantographes, et les circuits d'alimentation. Le circuit intermédiaire est uniquement dédié à la transmission du courant électrique, sans traitement, et peut être composé en partie ou en totalité d'éléments des pantographes et/ou des circuits d'alimentation uniquement destinés à la transmission du courant tel que des câbles ou fils électriques.

Un système de pantographe selon l'invention permet donc de prévenir la détérioration, destruction et/ou la formation d'un incendie, grâce à la présence du système limiteur de courant, dont le câble supraconducteur présente une résistance faible voire nulle lorsqu'un courant électrique inférieur à une intensité dite critique le traverse, et une résistance élevée en cas de circulation de courant électrique continu vers le circuit alternatif.

Une résistance faible correspond à une résistance inférieure ou égale à la résistance généralement relevée sur les câbles de conduction électrique classique, de type câble en cuivre. En pratique, un câble supraconducteur a une résistance nulle ou quasi-nulle lorsque le courant qui le traverse est d'intensité inférieure à l'intensité critique.

Une résistance élevée correspond à une résistance permettant de réduire la circulation du courant : de préférence, la résistance élevée a une valeur permettant de réduire le courant circulant du pantographe à courant continu vers le circuit alternatif à un courant d'intensité faible ne représentant pas de danger pour le transformateur principal.

Le passage d'une résistance faible à une résistance élevée correspond à un changement d'état du câble supraconducteur du premier état dit état supraconducteur, dans lequel sa résistance est faible (ou quasi nulle), vers un deuxième état dit état critique. L'état critique correspond notamment à l'état du matériau formant le câble à température ambiante : l'état critique est ainsi parfois appelé « état normal » dans la littérature liée aux supraconducteurs, car il correspond à l'état du matériau aux conditions normales de pression et température, sans propriété supraconductrice. La transition de l'état supraconducteur à l'état critique s'effectue dans un intervalle de temps très faible. La transition de l'état critique à l'état supraconducteur s'effectue après un intervalle de temps plus long, sous réserve que les conditions de température et d'intensité traversant le câble supraconducteur soient respectées (notamment intensité inférieure à l'intensité critique).

Les deux pantographes sont reliés au même circuit intermédiaire, ce qui permet de mutualiser certains composants, par exemple un transformateur de palpage.

Un système de pantographe comprenant deux pantographes correspond par exemple aux véhicules ferroviaires de type Train à Grande Vitesse (TGV) Duplex équipés d'un pantographe à courant continu adapté aux caténaires transportant un courant continu 1500V (réseau ferré du sud de la France), et d'un pantographe à courant alternatif adapté aux caténaires transportant un courant alternatif 25kV et 50Hz (réseau ferré grande vitesse français). Le système de pantographe selon l'invention permet d'éviter un incendie du transformateur principal de ces véhicules ferroviaires dû à la circulation de courant continu dans ledit transformateur principal, pouvant entrainer un incendie du véhicule ferroviaire par propagation.

Le câble supraconducteur est dimensionné pour laisser passer un courant d'intensité inférieure à son intensité critique et à réduire la circulation du courant si un courant d'intensité supérieure à l'intensité critique le traverse. L'intensité critique est prédéterminée en fonction du courant nominal pouvant circuler dans le câble supraconducteur en condition normale, pour lequel le câble supraconducteur doit présenter une résistance faible (par exemple le courant circulant vers un équipement relié au circuit intermédiaire tel qu'un transformateur de palpage), ainsi qu'en fonction de la valeur minimale du courant de défaut (dû à une défaillance d'un disjoncteur alternatif) égal au rapport entre la valeur minimale de la tension au niveau de la caténaire continu et la valeur maximale de la résistance ohmique de l'enroulement primaire du transformateur principal. Le câble supraconducteur peut ainsi être choisi parmi des câbles supraconducteurs disponibles sur le marché et dont les paramètres sont conformes à l'application (notamment l'intensité critique), ou conçu spécialement pour cette application.

L'utilisation d'un câble supraconducteur est une alternative aux solutions déjà proposées dans l'art antérieur. Elle ne nécessite pas de redondance, ni de systèmes complexes de surveillance qui doivent être suffisamment rapides pour détecter une panne avant qu'elle provoque la détérioration/destruction du transformateur, ou un incendie. En outre, le câble supraconducteur n'est pas détruit et retourne à son état initial, l'état supraconducteur, après un certain intervalle de temps et sous réserve que l'intensité du courant le traversant reste inférieure à l'intensité critique.

En outre, le changement d'état du câble supraconducteur est automatique et ne nécessite pas de commande.

Avantageusement, un système de pantographe selon l'invention comprend un transformateur de palpage, adapté pour détecter le type de courant capté par le pantographe en contact avec la caténaire.

Selon d'autres variantes de l'invention, le système de pantographe comprend plusieurs transformateurs de palpage. Toutefois, l'utilisation d'un seul transformateur de palpage permet de réduire les coûts et l'encombrement sur la toiture du véhicule ferroviaire. En outre, l'utilisation d'un seul transformateur de palpage permet de ne pas nécessiter de circuit supplémentaire.

Avantageusement et selon l'invention, le système limiteur de courant est adapté pour déclencher un repliement du pantographe à courant continu en cas de détection par le transformateur de palpage d'une tension nulle à ses bornes.

Avantageusement, le système limiteur de courant comprend un voltmètre disposé en parallèle du câble supraconducteur, et est adapté pour déclencher un repliement du pantographe à courant continu en cas de détection par le voltmètre d'une tension non nulle aux bornes du câble supraconducteur.

Selon ces deux aspects de l'invention, le changement d'état du câble supraconducteur peut aussi entrainer le repliement du pantographe à courant continu, de façon à supprimer totalement le risque de détérioration, destruction et/ou la formation d'un incendie. En outre, le repliement du pantographe n'engendre pas d'arcs électriques comme dans les systèmes de pantographe de l'art antérieur, car le courant est déjà fortement réduit grâce au câble supraconducteur. Enfin, contrairement aux systèmes de pantographe de l'art antérieur où le repliement doit être effectué très rapidement pour empêcher toute dégradation, le système de l'invention permet de réduire le courant grâce au câble supraconducteur puis dans un deuxième temps de replier le pantographe.

Pour déclencher le repliement des pantographes, le système de pantographe peut nécessiter la réception d'un signal de repliement uniquement du transformateur de palpage, uniquement du système limiteur de courant, ou des deux combinés, pour permettre une redondance et empêcher ainsi un repliement intempestif.

Avantageusement, les pantographes sont repliés par des circuits pneumatiques, par exemple des circuits d'usure d'archet. Les circuits d'usure d'archet sont connus et permettent de replier les pantographes en cas d'usure d'archet. L'utilisation des circuits pneumatiques déjà présents permet de réduire les coûts du système de pantographe.

Avantageusement et selon l'invention, le système limiteur de courant comprend une résistance disposée en parallèle du câble supraconducteur.

Selon cet aspect de l'invention, la résistance permet un réglage précis de l'intensité critique, et permet d'éviter un basculement intempestif du câble supraconducteur dans l'état critique en cas de surtension qui peuvent survenir en régime transitoire (à la connexion ou déconnexion d'un pantographe à une caténaire par exemple).

L'invention concerne également un véhicule ferroviaire caractérisé en ce qu'il comprend un système de pantographe selon l'invention.

Un véhicule ferroviaire comprenant ledit système de pantographe selon l'invention est donc moins susceptible d'être touché par un incendie formé au niveau du transformateur principal.

L'invention concerne également un système de pantographe et un véhicule ferroviaire caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1, décrite précédemment, est une vue schématique d'un système de pantographe selon l'art antérieur,
- la figure 2, décrite précédemment, est une vue schématique d'un système de pantographe selon l'art antérieur, présentant une défaillance au niveau d'un disjoncteur,
- la figure 3 est une vue schématique d'un système de pantographe selon un premier mode de réalisation de l'invention,
- la figure 4 est une vue schématique d'un système de pantographe selon le premier mode de réalisation de l'invention, présentant une défaillance au niveau d'un disjoncteur,
- la figure 5 est une vue schématique d'un système de pantographe selon un deuxième mode de réalisation de l'invention,
- la figure 6 est une vue schématique d'un système de pantographe selon un troisième mode de réalisation de l'invention.

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

Comme décrit précédemment, la figure 1 représente un système 10 de pantographe de l'art antérieur, et la figure 2 représente le même système 10 de pantographe de l'art antérieur dans lequel une défaillance au niveau du disjoncteur 26 alternatif du circuit d'alimentation alternatif entraîne la circulation d'un courant continu dans le transformateur 22 principal, entraînant la dégradation de celui-ci, et notamment engendrant un risque de destruction et d'incendie.

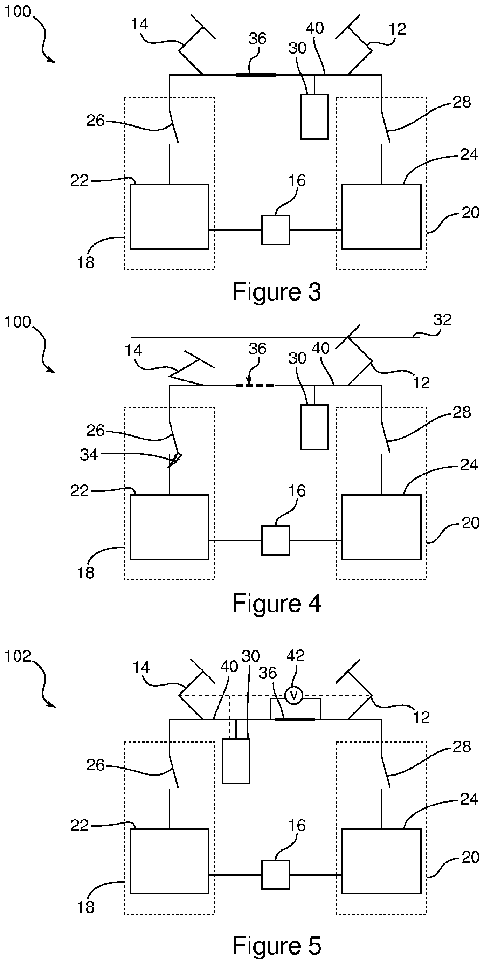

Les figures 3 et 4 représentent un système 100 de pantographe selon un premier mode de réalisation de l'invention. La figure 3 représente le système de pantographe seul et la figure 4 représente le système de pantographe en fonctionnement, relié à une caténaire, et dans lequel le circuit 18 alternatif présente une défaillance au niveau du disjoncteur 26 alternatif.

Le système 100 de pantographe est similaire au système de pantographe décrit aux figures 1 et 2, auquel est ajouté un système limiteur de courant comprenant un câble 36 supraconducteur entre le pantographe 12 à courant continu et le circuit 18 alternatif. Le câble 36 supraconducteur est situé sur la partie du circuit, dit circuit 40 intermédiaire, reliant le pantographe 12 à courant continu et le pantographe 14 à courant alternatif (ou pantographe à courant monophasé) au circuit 18 alternatif et au circuit 20 continu. Ce circuit 40 intermédiaire est uniquement composé d'éléments conducteurs tels que des câbles ou fils électriques permettant la transmission d'un courant électrique sans traitement, et peut être notamment composé en partie ou en totalité d'éléments conducteurs provenant des pantographes ou des circuits d'alimentation.

En particulier, ce mode de réalisation représente un système 100 de pantographe d'un TGV Duplex tel que décrit précédemment, où le pantographe 12 à courant continu est adapté aux caténaires transportant un courant continu 1500V, et le pantographe 14 à courant alternatif est adapté aux caténaires transportant un courant alternatif 25kV et 50Hz, auquel on ajoute le câble 36 supraconducteur.

En fonctionnement normal, le système 100 de pantographe transmet un courant électrique d'une caténaire vers le circuit d'alimentation adapté, par exemple :
- d'une caténaire 1500V continu vers le circuit continu, via le pantographe 12 à courant continu. Dans ce cas, l'intensité du courant électrique parcourant le câble 36 supraconducteur est nulle, la totalité du courant électrique circulant directement vers le circuit continu et le transformateur 30 de palpage, sans traverser le câble 36 supraconducteur. Seul un courant de très faible intensité circule dans le transformateur 30 de palpage correspondant à l'intensité de palpage du courant.
- d'une caténaire 25kV et 50Hz vers le circuit alternatif, via le pantographe 14 à courant alternatif. Dans ce cas, l'intensité du courant électrique parcourant le câble 36 supraconducteur est très faible, la quasi-totalité du courant électrique circulant directement vers le circuit alternatif sans traverser le câble 36 supraconducteur. Seul un courant de faible intensité circule dans le câble supraconducteur, inférieure à l'intensité critique, correspondant à l'intensité de palpage du courant circulant vers le transformateur 30 de palpage.

Dans toutes ces situations de fonctionnement dit normal, le câble 36 supraconducteur est dans un premier état dit état supraconducteur.

En cas de fonctionnement défaillant du disjoncteur 26 alternatif, comme représenté par la référence 34 sur la figure 4 et comme précédemment décrit en référence à la figure 2, et si le pantographe 12 à courant continu est relié à une caténaire 32 sous tension 1500V continue, un courant important, d'intensité de l'ordre de dix fois le courant de faible intensité circulant en situation normale, et par exemple de l'ordre de 200A minimum, va circuler entre le pantographe 12 à courant continu et le circuit 18 alternatif.

Le câble 36 supraconducteur est dimensionné pour être basculer dans un deuxième état dit état critique si l'intensité du courant le traversant est supérieure à une intensité dite intensité critique. En fixant l'intensité critique du câble supraconducteur en fonction de l'intensité maximale traversant le câble 36 supraconducteur en situation normale et l'intensité le traversant en cas de défaillance (par exemple en fixant l'intensité critique à 100A), le câble 36 supraconducteur basculera dans l'état critique si le courant électrique provenant de la caténaire 1500V continu traverse le câble 36 supraconducteur, limitant ainsi le courant continu circulant vers le circuit alternatif dans le circuit du fait de la résistance élevée du câble 36 supraconducteur, comme représenté en référence à la figure 4 par des pointillés représentant le câble 36 supraconducteur dans l'état critique. Le circuit 18 alternatif reçoit donc un courant continu faible (quasi-nul) de la caténaire 32, évitant ainsi tout risque de dégradation, destruction et/ou de formation d'incendie au niveau du transformateur 22 principal.

La figure 5 représente un système 102 de pantographe selon un deuxième mode de réalisation de l'invention.

Dans ce mode de réalisation, le transformateur 30 de palpage est situé de l'autre côté du câble 36 supraconducteur, c'est-à-dire qu'il reste relié au pantographe 14 à courant alternatif en cas de basculement du câble 36 supraconducteur dans l'état critique.

En outre, dans ce mode de réalisation, le système limiteur de courant est configuré pour permettre le repliement du pantographe 12 à courant continu (ou éventuellement des deux pantographes 12, 14) par exemple via des circuits pneumatiques (non représentés). Les circuits pneumatiques sont par exemple des circuits pneumatiques existants, tel que des circuits pneumatiques d'usure d'archet, adaptés pour replier les pantographes en cas de détection d'une usure prononcée d'un archet d'un pantographe. Le repliement du pantographe 12 à courant continu permet d'isoler totalement le pantographe des caténaires et ainsi réduire le courant de défaut à zéro.

La détection du passage du câble 36 supraconducteur de l'état supraconducteur à l'état critique peut être réalisée via le transformateur 30 de palpage. Le transformateur 30 de palpage détecte habituellement une tension non nulle à ses bornes en conditions normales. Lorsque le câble 36 supraconducteur bascule dans l'état critique, le transformateur 30 de palpage ne détecte plus aucune tension. Si le transformateur 30 de palpage détecte une tension nulle à ses bornes, il peut alors transmettre au pantographe 12 à courant continu un signal de repliement.

Pour améliorer la fiabilité et éviter d'abaisser le pantographe 12 à courant continu intempestivement, l'information provenant du transformateur 30 de palpage peut être redondée par d'autres informations. Par exemple, le système limiteur de courant peut comprendre un voltmètre 42 permettant de mesurer la valeur de la tension aux bornes du câble supraconducteur. En fonctionnement normal, le câble supraconducteur est dans l'état supraconducteur et la tension aux bornes du câble est nulle car le câble supraconducteur a une résistance nulle. En cas de disfonctionnement, le câble supraconducteur est dans l'état critique et la tension aux bornes du câble est non-nulle, car le câble a une résistance élevée. Si le transformateur de palpage détecte une tension nulle et le voltmètre une tension non-nulle, un signal de repliement est envoyé au pantographe 12 à courant continu.

Selon un autre mode de réalisation, seul le voltmètre est utilisé pour décider du repliement des pantographes. Ainsi, lorsque système limiteur de courant détecte une tension non-nulle aux bornes du câble supraconducteur, il peut envoyer un signal de repliement au pantographe 12 à courant continu.

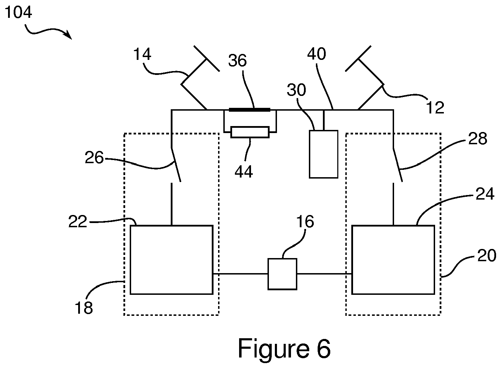

La figure 6 représente un système 104 de pantographe selon un troisième mode de réalisation de l'invention. Dans ce mode de réalisation, une résistance 44 est placée en parallèle du câble 36 supraconducteur. Cette résistance 44 permet un réglage précis de l'intensité critique, et permet d'éviter un basculement intempestif du câble 36 supraconducteur dans l'état critique en cas de surtension qui peuvent survenir en régime transitoire (à la connexion ou déconnexion d'un pantographe à une caténaire par exemple).

L'invention ne se limite pas aux seuls modes de réalisation décrits. En particulier, le système de pantographes peut comprendre plus de deux pantographes. Dans ce cas, il est possible de connecter chaque pantographe aux autres via un câble supraconducteur.

## Revendications

1. Système de pantographe ferroviaire de captage d'un courant électrique d'une caténaire (32) dans laquelle circule un courant électrique alternatif ou continu, destiné à alimenter un groupe moteur (16) d'un véhicule ferroviaire, comprenant :
- un premier circuit d'alimentation du groupe moteur en courant continu, dit circuit (20) continu, adapté pour recevoir un courant électrique continu, et comprenant un convertisseur (24) continu-continu adapté pour convertir ledit courant électrique continu pour alimenter le groupe moteur (16),
- un deuxième circuit d'alimentation du groupe moteur en courant alternatif, dit circuit (18) alternatif, adapté pour recevoir un courant électrique alternatif, et comprenant un transformateur (22) principal adapté pour transformer le courant électrique alternatif pour alimenter le groupe moteur (16),
- un circuit (40) intermédiaire, reliant le circuit (20) continu et le circuit (18) alternatif,
- au moins un pantographe, dit pantographe (12) à courant continu, adapté pour relier le circuit (40) intermédiaire et la caténaire (32), et pour transmettre audit circuit (40) intermédiaire un courant électrique continu provenant de la caténaire (32) lorsque celle-ci est parcourue par un courant électrique continu,
- au moins un pantographe, dit pantographe (14) à courant alternatif, adapté pour relier le circuit (40) intermédiaire et la caténaire (32), et pour transmettre audit circuit (40) intermédiaire un courant électrique alternatif provenant de la caténaire (32) lorsque celle-ci est parcourue par un courant électrique alternatif,
**caractérisé en ce que** le circuit (40) intermédiaire comprend un système limiteur de courant, comprenant un câble supraconducteur disposé dans le circuit (40) intermédiaire entre ledit pantographe (12) à courant continu et le circuit (18) alternatif et configuré pour présenter un premier état dit état supraconducteur, dans lequel le câble supraconducteur a une résistance faible en cas de circulation, vers le circuit (18) alternatif, d'un courant électrique continu d'intensité inférieure à une intensité prédéterminée, dite intensité critique, et pour basculer dans un deuxième état dit état critique, dans lequel le câble supraconducteur a une résistance élevée en cas de circulation, vers le circuit (18) alternatif, d'un courant électrique continu d'intensité supérieure à l'intensité critique.

2. Système de pantographe selon la revendication 1, **caractérisé en ce qu'**il comprend un transformateur (30) de palpage, adapté pour détecter le type de courant capté par le pantographe en contact avec la caténaire.

3. Système de pantographe selon la revendication 2, **caractérisé en ce que** le système limiteur de courant est adapté pour déclencher un repliement du pantographe à courant continu en cas de détection par le transformateur de palpage d'une tension nulle aux bornes du transformateur de palpage.

4. Système de pantographe selon l'une des revendications 1 à 3, **caractérisé en ce que** le système limiteur de courant comprend un voltmètre disposé en parallèle du câble supraconducteur, et est adapté pour déclencher un repliement du pantographe à courant continu en cas de détection par le voltmètre d'une tension non nulle aux bornes du câble supraconducteur.

5. Système de pantographe selon l'une des revendications 1 à 4, **caractérisé en ce que** le système limiteur de courant comprend une résistance disposée en parallèle du câble supraconducteur.

6. Véhicule ferroviaire, **caractérisé en ce qu'**il comprend un système de pantographe (100, 102) selon l'une des revendications 1 à 5.

## Patentansprüche

1. Schienenverkehr-Stromabnehmersystem zum Abnehmen eines elektrischen Stroms von einer Oberleitung (32), in der ein Wechsel- oder Gleichstrom fließt, dazu bestimmt, eine Motorgruppe (16) eines Schienenfahrzeugs zu versorgen, umfassend:
- eine erste Schaltung zur Versorgung der Motorgruppe mit Gleichstrom, genannt Gleichschaltung (20), angepasst zum Aufnehmen eines elektrischen Gleichstroms und umfassend einen Gleichstromwandler (24), angepasst zum Umwandeln des elektrischen Gleichstroms zum Versorgen der Motorgruppe (16),
- eine zweite Schaltung zur Versorgung der Motorgruppe mit Wechselstrom, genannt Wechselschaltung (18), angepasst zum Aufnehmen eines elektrischen Wechselstroms und umfassend einen Haupttransformator (22), angepasst zum Transformieren des elektrischen Wechselstroms zum Versorgen der Motorgruppe (16),
- eine Zwischenschaltung (40), die die Gleichschaltung (20) und die Wechselschaltung (18) verbindet,
- mindestens einen Stromabnehmer, genannt Gleichstrom-Stromabnehmer (12), angepasst zum Verbinden der Zwischenschaltung (40) und der Oberleitung (32) und zum Übertragen eines elektrischen Gleichstroms an die Zwischenschaltung (40), der von der Oberleitung (32) stammt, wenn diese von einem elektrischen Gleichstrom durchströmt wird,
- mindestens einen Stromabnehmer, genannt Wechselstrom-Stromabnehmer (14), angepasst zum Verbinden der Zwischenschaltung (40) und der Oberleitung (32) und zum Übertragen eines elektrischen Wechselstroms an die Zwischenschaltung (40), der von der Oberleitung (32) stammt, wenn diese von einem elektrischen Wechselstrom durchströmt wird,
**dadurch gekennzeichnet, dass** die Zwischenschaltung (40) ein Strombegrenzungssystem umfasst, umfassend ein supraleitendes Kabel, das in der Zwischenschaltung (40) zwischen dem Gleichstrom-Stromabnehmer (12) und der Wechselschaltung (18) angeordnet ist und konfiguriert ist zum Vorweisen eines ersten Zustands, genannt Supraleitfähigkeitszustand, in dem das supraleitende Kabel im Fall von Durchströmung eines elektrischen Gleichstroms einer Intensität, die niedriger ist als eine vorher festgelegte Intensität, genannt kritische Intensität, in Richtung der Wechselschaltung (18) einen geringen Widerstand aufweist, und zum Umschalten in einen zweiten Zustand, genannt kritischer Zustand, in dem das supraleitende Kabel im Fall von Durchströmung eines elektrischen Gleichstroms einer Intensität, die höher ist als die kritisch Intensität, in Richtung der Wechselschaltung (18) einen erhöhten Widerstand aufweist.

2. Stromabnehmersystem nach Anspruch 1, **dadurch gekennzeichnet, dass** es einen Sondentransformator (30) umfasst, angepasst zum Detektieren des von dem Stromabnehmer in Kontakt mit der Oberleitung abgenommenen Stromtyps.

3. Stromabnehmersystem nach Anspruch 2, **dadurch gekennzeichnet, dass** das Strombegrenzungssystem im Fall von Detektion einer Nullspannung an den Klemmen des Sondentransformators durch den Sondentransformator zum Auslösen eines Zurückfaltens des Gleichstrom-Stromabnehmers angepasst ist.

4. Stromabnehmersystem nach einem der Ansprüche 1 bis 3, **dadurch gekennzeichnet, dass** das Strombegrenzungssystem ein Spannungsmessgerät umfasst, das parallel zu dem supraleitenden Kabel angeordnet ist, und im Fall von Detektion einer Nicht-Nullspannung an den Klemmen des supraleitenden Kabels zum Auslösen eines Zurückfaltens des Gleichstrom-Stromabnehmers angepasst ist.

5. Stromabnehmersystem nach einem der Ansprüche 1 bis 4, **dadurch gekennzeichnet, dass** das Strombegrenzungssystem einen parallel zu dem supraleitenden Kabel angeordneten Widerstand umfasst.

6. Schienenfahrzeug, **dadurch gekennzeichnet, dass** es ein Stromabnehmersystem (100, 102) nach einem der Ansprüche 1 bis 5 umfasst.

## Claims

1. A railway pantograph system for picking up an electric current from a catenary (32) in which an alternating or direct electric current flows, intended to supply a power unit (16) of a railway vehicle, comprising:
- a first circuit for supplying the power unit with direct current, called a DC circuit (20), adapted to receive a direct electric current, and comprising a DC-DC converter (24) adapted to convert said direct electric current to supply the power unit (16)
- a second circuit for supplying the power unit with alternating current, called an AC circuit (18), adapted to receive an alternating electric current, and comprising a main transformer (22) adapted to transform the alternating electric current to supply the power unit (16),
- an intermediate circuit (40), connecting the DC circuit (20) and the AC circuit (18),
- at least one pantograph, called a DC pantograph (12), adapted to connect the intermediate circuit (40) and the catenary (32), and to transmit to said intermediate circuit (40) a direct electric current coming from the catenary (32) when the latter is traversed by a direct electric current,
- at least one pantograph, known as an AC pantograph (14), adapted to connect the intermediate circuit (40) and the catenary (32), and to transmit to said intermediate circuit (40) an alternating electric current coming from the catenary (32) when the latter is traversed by an alternating electric current,
**characterised in that** the intermediate circuit (40) comprises a current limiting system, comprising a superconducting cable disposed in the intermediate circuit (40) between said DC pantograph (12) and the AC circuit (18) and configured to have a first socalled superconducting state, wherein the superconducting cable has a low resistance in the event of a direct electric current flowing to the AC circuit (18) at a current level below a predetermined current level, called the critical current level, and to switch to a second state, called the critical state, wherein the superconducting cable has a high resistance in the event of a direct electric current flowing to the AC circuit (18) of a current level greater than the critical current level.

2. The pantograph system according to claim 1, **characterised in that** it comprises a sensing transformer (30), adapted to detect the type of current picked up by the pantograph in contact with the catenary.

3. The pantograph system according to claim 2, **characterised in that** the current limiting system is adapted to trigger a folding of the DC pantograph in the event that the sensing transformer detects a zero voltage at the terminals of the sensing transformer.

4. The pantograph system according to any one of claims 1 to 3, **characterised in that** the current limiting system comprises a voltmeter disposed in parallel with the superconducting cable, and is adapted to trigger a folding of the DC pantograph in the event the voltmeter detects a non-zero voltage at the terminals of the superconducting cable.

5. The pantograph system of any one of claims 1 to 4, **characterised in that** the current limiting system comprises a resistance disposed in parallel with the superconducting cable.

6. A railway vehicle, **characterized in that** it comprises a pantograph system (100, 102) according to any one of claims 1 to 5.
